# EUROPÄISCHE PATENTSCHRIFT

(11) **EP 3 628 891 B1**
(45) Veröffentlichungstag und Bekanntmachung des Hinweises auf die Patenterteilung: **01.09.2021**
(21) Anmeldenummer: 18197404.9
(22) Anmeldetag: 28.09.2018
(51) Int. Cl.: F16H 25/18, B60H 1/34

(54) **FÜHRUNGSANORDNUNG MIT MEHREREN FÜHRUNGSBAHNEN**
GUIDE ARRANGEMENT WITH MULTIPLE GUIDE TRACKS
DISPOSITIF DE GUIDAGE À PLUSIEURS PISTES DE GUIDAGE

(43) Veröffentlichungstag der Anmeldung: 01.04.2020
(73) Patentinhaber: Dr. Schneider Kunststoffwerke GmbH, 96317 Kronach-Neuses (DE)
(72) Erfinder: Schneider, Johannes, 96328 Küps (DE)

(56) Entgegenhaltungen:
- DE-B3-102015 101 101
- DE-U1-202011 050 523

## Beschreibung

Es wird eine Führungsanordnung mit mehreren Führungsbahnen beschrieben, die über eine Führungskulisse miteinander verbunden sind. Die Führungsanordnung kann zur Übertragung einer Rotationsbewegung einer Antriebseinrichtung, bspw. eines Rotationsantriebs (z.B. Elektromotor), in eine Linearbewegung verwendet werden.

Die Führungsanordnung kann bspw. für Anordnungen mit Luftausströmern in Fahrzeugen eingesetzt werden. Luftausströmer dienen zur Ablenkung von ausgegebener Luft, die von einer Klimaanlage oder einer anderen Belüftungseinrichtung zur Verfügung gestellt wird. Luftausströmer werden bei Fahrzeugen dazu verwendet, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Bei Luftausströmern kann in der Regel neben der Steuerung der Ablenkung von ausgegebener Luft, bspw. von einer Klimaanlage, auch die Menge an ausgegebener Luft geregelt werden.

Die Führungsanordnung kann zur Steuerung verschiedener Ablenkeinrichtungen und zur Steuerung der Luftmenge verwendet werden. Die Führungsanordnung kann ferner dazu verwendet werden, um Anordnungen mit zwei Luftausströmern über einen einzelnen Antrieb zu steuern.

Luftausströmer können in einem Fahrzeugarmaturenbrett oder im Bereich der A-, B- oder C- Säule oder am Dach eines Kraftfahrzeuges angeordnet sein.

### Stand der Technik

Es ist bekannt, Antriebseinrichtungen zu verwenden, die jeweils eine Funktion erfüllen. Solche Antriebseinrichtungen können einen Elektromotor aufweisen, der zum Verstellen einer Vorrichtung ausgebildet ist.

DE 10 2015 101 101 B3 offenbart eine Antriebseinrichtung zum Verstellen mindestens zweier Vorrichtungen mittels einer Antriebseinheit, wobei eine Kulissenanordnung vorgesehen ist, die mehrere Führungsbahnen aufweist. Die Anordnung ermöglicht ein Verstellen zweier Vorrichtungen mittels einer einzigen Antriebseinheit, wobei ein Führungselement in der Kulissenanordnung verlagert wird. Die Kulissenanordnung weist mehrere Führungsbahnen auf, wobei in den Führungsbahnen Verschiebeglieder eines ersten Verstellelementes und mindestens eines zweiten Verstellelementes gelagert sind. Die Anordnung aus DE 10 2015 101 101 B3 erfordert weitere Komponenten wie einen Schlitten und ein in dem Schlitten geführtes Führungselement, bestehend aus einer Führungshülse und einem Führungsstift, die über eine Feder vorgespannt sind. Die Feder bewirkt eine Verlagerung des Führungsstiftes, wobei ein stufenweises Erreichen der einzelnen Führungsbahnen bereitgestellt wird.

Die Vorrichtung aus DE 10 2015 101 101 B3 weist den Nachteil auf, dass diese komplex ausgebildet ist und mehrere Bauteile benötigt, um die stufenweise Verlagerung des Führungselementes in den entsprechenden Führungsbahnen zu ermöglichen. Zudem weist die Vorrichtung den Nachteil auf, dass die einzelnen Führungsbahnen erst nach Durchlaufen der gesamten Führungsstrecke über die Führungsbahnen und eine Rückführbahn erreicht werden können.

### Aufgabe

Es besteht die Aufgabe darin, eine Führungsanordnung anzugeben, welche die Probleme des Stands der Technik behebt und eine Führung mit mehreren Führungsbahnen aufweist, die ohne zusätzliche Elemente eine Verlagerung eines Führungselementes ermöglicht, wobei ein stufenweises Erreichen der einzelnen Führungsbahnen bereitgestellt wird.

### Lösung

Die vorstehend genannte Aufgabe wird durch eine Führungsanordnung mit mehreren Führungsbahnen gemäß Anspruch 1 gelöst.

Die Führungsanordnung ermöglicht die Führung eines Führungselementes, ohne dass eine Schenkelfeder zwingend erforderlich ist. Die einzelnen Führungsbahnen steigen in Richtung des Übergangs hin an und bieten damit die Möglichkeit einer Vorspannung eines Führungselementes, welches parallel zu den Führungsbahnen über einen Schlitten oder eine andere Vorrichtung verlagert werden kann. Das Führungselement gelangt nach dem Überfahren des Übergangs in den Bereich einer weiteren Führungsbahn und kann von dieser wiederum nur in eine weitere, im Übergang tiefer gelegene Führungsbahn verlagert werden. Es ist damit nicht möglich, in die vorherige Führungsbahn im Bereich der Führungskulisse zurückzukehren. Der Anstieg kann im Wesentlichen als flach ansteigende Rampe ausgebildet sein, welche eine Erhebung gegenüber einer benachbarten Führungsbahn ausbildet. Hierüber wird eine stufenweise Verlagerung eines Führungselementes über die Führungsanordnung ermöglicht, ohne dass komplexe Hilfseinrichtungen erforderlich sind.

Die Führungsanordnung stellt somit eine Verbesserung einer bekannten Kulissenanordnung dar, wie sie beispielsweise in DE 10 2015 101 101 B3 beschrieben ist.

Die Führungskulisse stellt den Bereich mit den Übergängen zwischen den einzelnen Führungsbahnen dar. Die konkrete Ausgestaltung der Übergänge hängt von der Ausbildung der Führungsbahnen sowie der gesamten Führungsanordnung und dem Einsatzzweck ab. In weiteren Ausführungsformen ist der Anstieg flach ansteigend, sodass eine leichte Vorspannung eines Führungselementes erreicht wird, welches beispielsweise über einen Arm gefedert an einer weiteren Einrichtung angeordnet ist. Im Weiteren kann die Führungsanordnung die Kulissenanordnung aus DE 10 2015 101 101 B3 ersetzen. Die Schenkelfeder aus DE 10 2015 101 101 B3, welche das Führungselement in eine Vorzugsrichtung nach unten drückt, ist aufgrund der hierin beschriebenen Ausbildung der Führungsanordnung nicht mehr erforderlich und kann daher entfallen.

Der Übergang zwischen den Führungsbahnen kann abgerundet ausgebildet sein. Abgerundete Übergänge reduzieren oder verhindern die Entstehung von Geräuschen, wenn ein Führungselement die Übergänge überfährt. Bei steil abfallenden Übergängen kann es zu einem Anschlagen eines Führungselementes auf die Fläche der darunter befindlichen Führungsbahn kommen. Bei abgerundeten Übergängen kann ein Führungselement auf die darunter befindliche Ebene "rutschen", ohne darauf aufzuschlagen. Die Übergänge können sowohl in Verlagerungsrichtung eines Führungselementes abgerundet ausgebildet sein als auch einen Anstieg orthogonal zur Verlagerungsrichtung eines Führungselementes aufweisen. Dabei ist die ansteigende Fläche einer Führungsbahn leicht geneigt, sodass ein Führungselement auf einer bestimmten Bahn oder Strecke innerhalb der Führungsbahn geleitet wird. Der Übergang von einer ersten Führungsbahn auf eine zweite Führungsbahn ist damit weiter definierbar.

Mehrere Führungsbahnen können untereinander und versetzt zueinander angeordnet sein. Die Führungsanordnung kann Führungsbahnen aufweisen, die analog zu der Kulissenanordnung aus DE 10 2015 101 101 B3 angeordnet und ausgebildet sind. Eine solche Anordnung der Führungsbahnen ermöglicht ein stufenweises Verbringen eines Führungselementes in die jeweiligen Führungsbahnen.

Eine erste Führungsbahn ragt beispielsweise in einen Abschnitt einer benachbarten Führungsbahn, bevor diese ihre maximale Höhe erreicht hat. Bei nachfolgenden Führungsbahnen ist der Übergang im Bereich der Führungskulisse, die von Abschnitten der Führungsbahnen gebildet ist, ebenso ausgebildet. Somit kann für jeden Übergang ein Höhenunterschied erreicht werden, ohne dass die Führungsbahnen einen Höhenunterschied zueinander aufweisen müssen. Die der Führungskulisse abgewandten Abschnitte der Führungsbahnen können daher das gleiche Höhenniveau aufweisen.

Die Führungskulisse kann ferner Umlenkflächen aufweisen. Die Umlenkflächen dienen zur Führung eines Führungselementes, welches im Bereich der Führungskulisse zu den jeweiligen Führungsbahnen geführt wird. Die Umlenkflächen und die Übergänge sind so ausgebildet, dass definierte Verlagerungspfade für ein Führungselement vorgegeben sind und das Führungselement nicht entgegen einer definierten Verlagerungsrichtung bewegt werden kann. Dabei dienen die Übergänge nach dem Überfahren als Anschlag bzw. Wand, an welcher ein Führungselement verlagert werden kann. Es ist jedoch nicht möglich, dass nach dem Überfahren eines Übergangs das Führungselement wieder zurück in die ursprüngliche Führungsbahn gelangt.

Die Umlenkflächen können sich von den Führungsbahnen aus erstrecken und schräg zu den Führungsbahnen verlaufen. Die Umlenkflächen sind als Verlängerung der Wände der Führungsbahnen ausgebildet und sind der gewünschten Umlenkung entsprechend geneigt. Die schräge Ausbildung der Umlenkflächen stellt sicher, dass ein Führungselement von einer ersten Führungsbahn zu einer weiteren Führungsbahn über den Übergang geführt wird. Die Führungskulisse kann dabei insbesondere einen zick-zack-förmigen Verlauf aufweisen.

In weiteren Ausführungsformen können zwischen zwei übereinander oder nebeneinanderliegenden Führungsbahnen zwei Umlenkflächen aufeinander zu verlaufen und einer Führungsbahn gegenüberliegen. Der Verbindungsbereich der beiden Umlenkflächen liegt dann einer Führungsbahn im Wesentlichen mittig gegenüber. Im Zusammenspiel mit den ansteigenden Führungsbahnen im Bereich der Führungskulisse werden hierdurch auch Kanäle im Bereich der Führungskulisse ausgebildet, welche die gleiche Breite aufweisen können wie die einzelnen Führungsbahnen, sodass ein definierter Verlauf zwischen den einzelnen Führungsbahnen für ein Führungselement gegeben ist.

Eine letzte Führungsbahn der Führungsanordnung kann mit einer ersten Führungsbahn der Führungsanordnung über eine erste Rückführbahn verbunden sein. Aufgrund der Übergänge und dem Anstieg der Führungsbahnen im Bereich der Führungskulisse ist es nicht möglich, eine Verlagerung eines Führungselementes zurück durchzuführen. Daher muss zum Erreichen einer ersten Führungsbahn das Führungselement durch die Führungskulisse bewegt werden, wobei nach dem Durchfahren der Führungskulisse im Bereich der letzten Führungsbahn ein Führungselement über die erste Rückführbahn der ersten Führungsbahn wieder zugeführt werden kann. Ein Führungselement kann analog zu der Ausführung aus DE 10 2015 101 101 B3 sowohl vorwärts als auch rückwärts verlagert werden. Die Ausbildung der Führungsanordnung der hierin beschriebenen Ausführungsform ermöglicht eine Verlagerung in den einzelnen Führungsbahnen in beide Richtungen. Nach dem Überfahren eines Übergangs ist es jedoch nicht möglich, in die vorherige Führungsbahn zurückzukehren, sodass entweder eine Verlagerung innerhalb einer Führungsbahn durchgeführt wird oder der Führungsstift im Bereich der Führungskulisse einen Übergang überfährt und damit in eine tiefergelegene, untergeordnete Führungsbahn gelangt. Die erste Rückführbahn kann eine Rampe aufweisen, sodass eine Verlagerung des Führungselementes nach dem Überfahren der Rampe zurück nicht mehr möglich ist. Die konkrete Ausbildung der Führungsbahnen sowie der Rückführbahn hängt dabei davon ab, welcher Weg zur Verfügung steht. Vorzugsweise sind Rückführbahnen auch so ausgestaltet, dass ein definierter Weg für ein Führungselement vorgegeben ist. Die Führungsanordnung kann eine erste Rückführbahn aufweisen, da die einzelnen Führungsbahnen stufenweise versetzt zueinander angeordnet sind.

Zwischen mindestens zwei Führungsbahnen kann eine zweite Rückführbahn angeordnet sein, die mit der ersten Rückführbahn verbunden ist. Die erste Rückführbahn kann dabei vorzugsweise eine Rampe aufweisen, die vor einer zweiten Rückführbahn angeordnet ist. Nach dem Überfahren dieser Rampe befindet sich ein Führungselement in einem Abschnitt, in dem eine weitere Verlagerung entlang der Richtung der ersten Rückführbahn eine Rückführung zur ersten Führungsbahn oder zum Überfahren einer weiteren Rampe führt. Eine Verlagerung in der entgegengesetzten Richtung bewirkt ein Anschlagen an der Rampe und eine Weiterführung, wobei das Führungselement in die zweite Rückführbahn gelangt und von dort in die Führungskulisse. Die mindestens eine zweite Rückführbahn mündet in die Führungskulisse, sodass eine Rückführung über die zweite Rückführbahn ein schnelleres Erreichen von Führungsbahnen ermöglicht, die unterhalb einer ersten Führungsbahn angeordnet sind. Beispielsweise können zwischen sämtlichen Führungsbahnen einer Gruppe von Führungsbahnen, die untereinander angeordnet sind, zweite Rückführbahnen vorgesehen sein, die jeweils nach dem Überfahren einer Rampe erreichbar sind und mit einer ersten Rückführbahn verbunden sind. Je nachdem wie viele Rampen überfahren werden, befindet sich ein Führungselement in einer entsprechenden zweiten Rückführbahn und kann durch eine entgegengesetzte Verlagerung in einen Abschnitt der Führungskulisse gebracht werden, der zwischen zwei übereinander angeordneten Führungsbahnen liegt. Die zweiten Führungsbahnen gehen dann in eine weitere Führungsbahn über oder befinden sich auf Höhe einer Führungsbahn, sodass eine weitere Verlagerung das Erreichen einer entsprechenden Führungsbahn bereitstellt. Die zweiten Rückführbahnen können im Bereich der Anbindung an die Führungskulisse eine weitere Rampe aufweisen, die erst überfahren werden muss, damit ein Führungselement wieder zurück in die Führungskulisse gelangt. Die Rampe verhindert dabei, dass nach dem Überfahren dieser eine Rückführung in die zweiten Rückführbahnen möglich ist.

Die Führungsanordnung kann ferner mindestens ein Führungselement aufweisen, das in den Führungsbahnen verschiebbar gelagert ist. Das Führungselement kann mit einer Antriebseinrichtung gekoppelt sein, die beispielsweise eine Rotationsbewegung ausführt. Über eine Hebelanordnung, wie sie beispielsweise auch in DE 10 2015 101 101 B3 beschrieben ist, kann eine Übertragung der Rotationsbewegung, beispielsweise eines Elektromotors, auf das Führungselement erfolgen. Das Führungselement kann beispielsweise auch mit einem Schlitten verbunden sein, der parallel zur Führungsanordnung verlagerbar ist, wobei ein Führungselement als Führungsstift quer zur Verschieberichtung des Schlittens verlagerbar aufgenommen ist. Das Führungselement gleitet in Abhängigkeit der Rotationsbewegung in eine erste oder in eine zweite entgegengesetzte Richtung und folgt dabei den Führungsbahnen oder gelangt aufgrund der Übergänge und/oder der Rückführbahnen in bestimmte Abschnitte der Führungsanordnung.

Die Führungsanordnung selbst kann auf einer Platte ausgebildet sein, die Führungswände zwischen den Führungsbahnen und dem Bereich der Rückführbahnen sowie der Kulissenführung aufweist. Eine solche Führungsanordnung kann beispielsweise aus Kunststoff hergestellt werden. Hierzu eignet sich beispielsweise ein Spritzgussverfahren, wodurch die Führungsanordnung in hoher Stückzahl und kostengünstig herstellbar ist.

In mindestens einer Führungsbahn kann ein Verstellmittel verschiebbar gelagert sein, wobei das Verstellmittel über das Führungselement verlagerbar ist. Gelangt das Führungselement in eine Führungsbahn mit einem Verstellmittel, so bewirkt die Verlagerung des Führungselementes ebenfalls eine Verlagerung des Verstellmittels. Dieses kann beispielsweise als Zapfen ausgebildet sein, der entlang einer schlitzförmigen Öffnung innerhalb der Führungsbahn verlagerbar geführt ist. An der Rückseite kann das Verstellmittel mit weiteren Einrichtungen gekoppelt sein, sodass ein Verschieben des Verstellmittels eine Bewegung von weiteren Einrichtungen auslöst. Die Verlagerung des Verstellmittels kann dabei eine Linearbewegung und/oder eine Rotationsbewegung auslösen. Beispielsweise kann das Verstellmittel mit einer Zahnstange gekoppelt sein, die mit einem Zahnradschnitt in Eingriff steht, sodass eine weitere Rotationsbewegung erzeugt werden kann. In weiteren Ausführungsformen können in den Führungsbahnen verschiedene oder miteinander gekoppelte Verstellmittel aufgenommen sein, sodass unabhängig voneinander über eine einzelne Antriebseinrichtung verschiedene Bewegungen unabhängig voneinander erzielt werden können. Beispielsweise kann eine Betätigung von verschiedenen Einrichtungen über Verstellmittel analog zu den Verschiebeelementen mit ersten und zweiten Verstellgliedern erreicht werden, wie dies in DE 10 2015 101 101 B3 beschrieben ist.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: einen Ausschnitt einer Führungsanordnung einer ersten Ausführungsform in perspektivischer Ansicht;
- Fig. 2: eine weitere Darstellung des Ausschnitts von Fig. 1;
- Fig. 3: eine schematische Darstellung der Führungsanordnung der ersten Ausführungsform;
- Fig. 4: eine schematische Darstellung einer Führungsanordnung einer zweiten Ausführungsform; und
- Fig. 5: eine schematische Darstellung einer Führungsanordnung einer dritten Ausführungsform.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

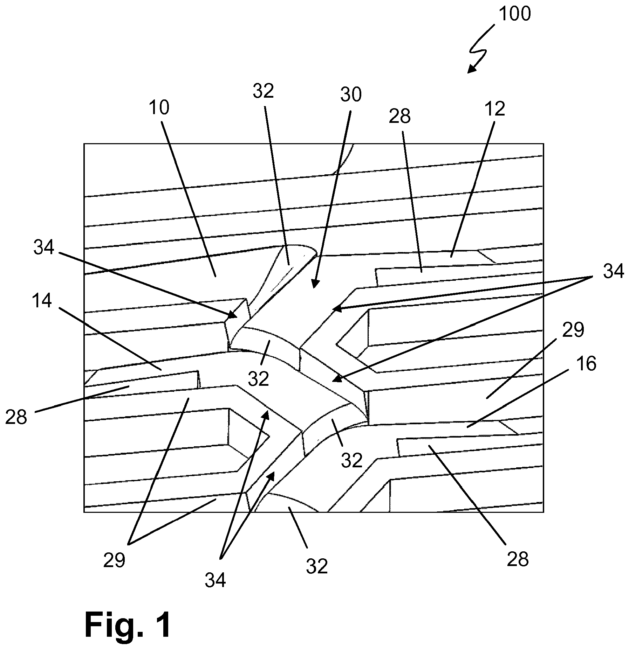

Fig. 1 zeigt einen Ausschnitt einer Führungsanordnung 100 einer ersten Ausführungsform in perspektivischer Ansicht. Die Führungsanordnung 100 der hierin beschriebenen Ausführungsformen ist ähnlich ausgebildet zu der Kulissenanordnung (18) von DE 10 2015 101 101 B3. Auch kann die Führungsanordnung 100 für eine darin beschriebene Anordnung mit einer Antriebseinrichtung verwendet werden und zur Ansteuerung von Luftausströmern dienen. Auf die in DE 10 2015 101 101 B3 gemachten Ausführungen wird hierauf Bezug genommen.

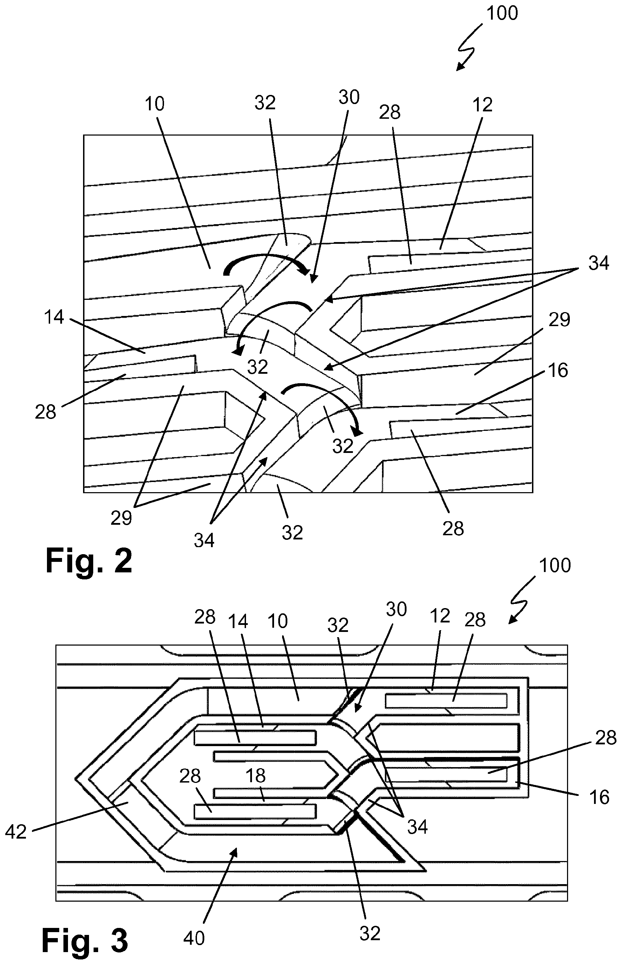

Die Führungsanordnung 100 weist fünf Führungsbahnen 10, 12, 14, 16 und 18 auf (siehe Fig. 3), die auf einer Platte angeordnet sind, die sich im Wesentlichen in einer Ebene erstreckt. Die Führungsbahnen 10 bis 18 selbst sind jedoch versetzt zueinander und gegenüberliegend angeordnet. So befinden sich die Führungsbahnen 10, 14 und 18 auf einer Seite und die Führungsbahnen 12 und 16 auf einer gegenüberliegenden Seite, wobei sich die Führungsbahnen 10 bis 18 nicht direkt gegenüberliegen sondern versetzt zueinander angeordnet sind.

Die Führungsbahnen 10 bis 18 sowie eine erste Rückführbahn 40 sind von Wänden 29 begrenzt. Ein Führungselement (in den Figuren nicht dargestellt) kann daher nur zwischen den Wänden entlang den Führungsbahnen 10 bis 18 und der Rückführbahn 40 verlagert werden.

Die Führungsanordnung 100 besteht aus Kunststoff und ist daher in einem Spritzgussprozess herstellbar.

Zwischen den einzelnen Führungsbahnen 10 bis 18 ist eine Führungskulisse 30 ausgebildet, welche die Übergänge 32 zwischen den einzelnen Führungsbahnen 10 bis 18 umfasst. Der Verlauf der Führungskulisse 30 ist in der ersten Ausführungsform im Wesentlichen zick-zack-förmig. Dies ist der gegenüberliegenden und versetzten Anordnung der Führungsbahnen 10 und 18 geschuldet. Die Führungsbahnen 10 bis 18 weisen in Richtung der Führungskulisse 30 hin einen Anstieg auf. Die Führungsbahnen 10 bis 18 sind dabei jeweils so ausgebildet, dass das Ende einer höhergelegenen Führungsbahn ein größeres Höhenniveau erreicht als der Abschnitt einer benachbarten Führungsbahn, in den die höhergelegene Führungsbahn mündet, sodass nach dem Überfahren des Übergangs 32 ein Führungselement abfällt. Die Führungsbahnen 10 bis 18 weisen daher nicht nur eine stufenförmige Ausbildung übereinander, sondern auch relativ zur Ebene der Führungsanordnung 100 auf. Die Ausbildung ist auch so gewählt, dass der Anstieg relativ zum Übergang 32 auch einen Anstieg in Richtung des Übergangs 32 aufweist, wie in dem Übergang zwischen der Führungsbahn 10 und der Führungskulisse 30 gezeigt.

Die Übergänge 32 sind abgerundet ausgebildet. Dies ermöglicht ein Überfahren der Übergänge 32, ohne dass es zu einem harten Aufschlagen eines Führungselementes nach dem Überfahren kommt. Eine Verlagerung zurück ist über die Übergänge 32 nicht möglich, sodass ein Führungselement nicht mehr zurück in die vorhergehende Führungsbahn 10 bis 18 gelangen kann. Die Übergänge 32 dienen auch als Wand bzw. Umlenkfläche, an welchen ein Führungselement nach dem Überfahren entlang geführt werden kann.

Die runde Ausbildung der Übergänge 32 reduziert Geräusche beim Übergang. Die Ausführung ist daher sehr geräuscharm.

Umlenkflächen 34, die an verlängerten Abschnitten der Wände 29 ausgebildet sind, führen ein Führungselement bei der Verlagerung entlang der Führungsbahnen 10 bis 18. Die Führungsbahnen 10 bis 18 weisen Öffnungen 28 auf, in welchen Verstellmittel (in den Figuren nicht dargestellt) verschiebbar gelagert sind. Die Verstellmittel können über ein Führungselement entlang der Öffnungen 28 verschoben werden, wodurch eine entsprechende Bewegung von weiteren Einrichtungen erreicht werden kann. Die Verstellmittel können analog zu den Verschiebeelementen (38, 40) von DE 10 2015 101 101 B3 ausgebildet sein, wobei ein Verstellelement ein erstes Verstellglied und ein zweites Verstellglied aufweisen kann. Ein erstes Verstellglied ist beispielsweise in einer ersten Öffnung 28 und ein zweites Verstellglied ist beispielsweise in einer zweiten Öffnung 28 versetzt und gegenüberliegend zum ersten Verstellglied in den Führungsbahnen 10 bis 18 aufgenommen. Damit ist es möglich, die Verlagerung eines Verstellmittels durch ein Verschieben rückgängig zu machen bzw. ein verlagertes Verstellmittel wieder in eine Ausgangsposition zurückzubewegen.

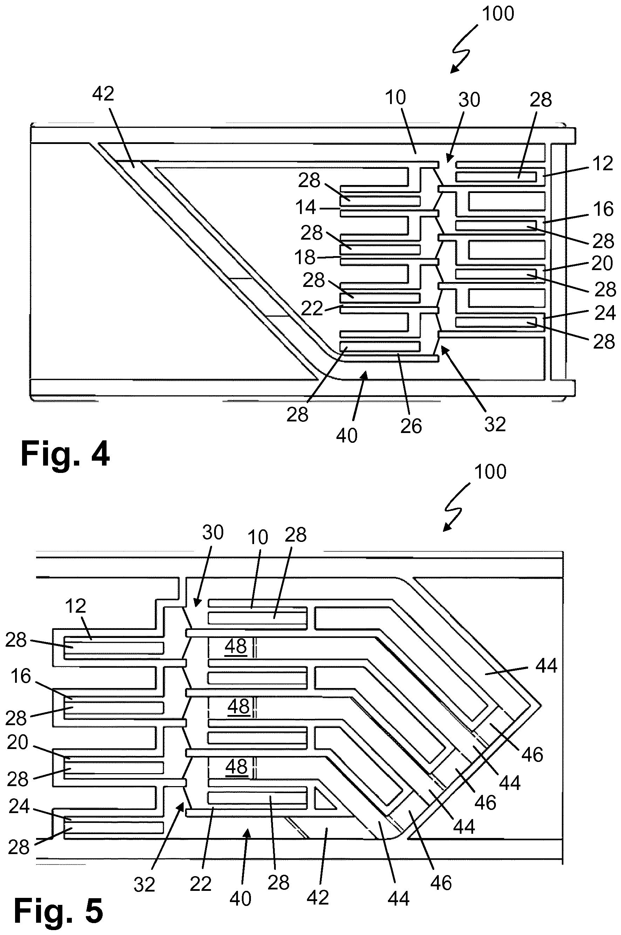

Die Ausführung der Verstellelemente kann derart ausgeführt sein, wie in DE 10 2015 101 101 B3 beschrieben, wobei hierauf Bezug genommen wird. Die hierin gezeigten Ausführungen einer Führungsanordnung 100 ermöglichen die Aufnahme mehrerer Verstellmittel (analog zu den Verschiebeelementen 38 und 40 von DE 10 2015 101 101 B3), wie für die zweiten und dritte Ausführungsform in den Fig. 4 und 5 gezeigt.

In Fig. 2 ist eine weitere Darstellung des Ausschnitts von Fig. 1 gezeigt, wobei zusätzlich Pfeile den Weg eines Führungselementes schematisch andeuten. Ein Führungselement wird zuerst entlang einer Führungsbahn 10 bewegt und gelangt dann über den Übergang 32 im Bereich der Führungskulisse 30 in eine zweite Führungsbahn 12. Wenn das Führungselement weiter in der gleichen Richtung verlagert wird, gelangt das Führungselement in die Führungsbahn 12 und kann ein Verstellelement verschieben, das durch die Öffnung 28 ragt. In einer entgegengesetzten Verlagerungsrichtung gleitet das Führungselement an einer Umlenkfläche 34 entlang und überfährt den Anstieg der Führungsbahn 12 und den Übergang 32. Nach dem Überfahren des Übergangs 32 fällt das Führungselement auf das Niveau der dritten Führungsbahn 14 ab. Wird die Verlagerung in dieser Richtung fortgesetzt, kann ein weiteres Verstellelement verschoben werden, das in der Öffnung 28 aufgenommen ist. Vorzugsweise sind die Verstellelemente in den Führungsbahnen 12 und 14 miteinander gekoppelt, sodass eine Verlagerung des Verstellelementes nach rechts in der Führungsbahn 12 eine Verlagerung des Verstellelementes in der Führungsbahn 14 ebenfalls nach rechts bewirkt. Entsprechend kann durch eine Verlagerung des Verstellelementes über die Führungsbahn 14 die Verlagerung rückgängig gemacht werden.

Wird das Führungselement aus der Führungsbahn 14 weiter nach rechts verlagert, so gelangt dieses in Anlage mit dem Übergang 32, der in diesem Fall als Wand dient, und in Anlage mit der Umlenkfläche 34. Nach einer weiteren Verlagerung fällt das Führungselement über den Übergang 32 auf das Niveau der Führungsbahn 16 herab. Bei einer weiteren Verlagerung kann ein weiteres Verstellelement verlagert werden. Bei einer Verlagerung in der entgegengesetzten Richtung gelangt das Führungselement in Anlage an den Übergang 32 und die Umlenkfläche 34 und gleitet über den Übergang 32 auf das Niveau einer darunter befindlichen Führungsbahn 18. Von dort aus kann bei einer Verlagerung über den unteren Übergang 32 das Führungselement in die erste Rückführbahn 40 gelangen (siehe Fig. 3). Wird dann das Führungselement weiter nach links verlagert, so gleitet dieses an der Wand der Rückführbahn 40 entlang und überfährt eine Rampe 42. Nach dem Überfahren der Rampe 42 kann das Führungselement nicht mehr zurück verbracht werden. Eine weitere Verlagerung eines Schlittens, in dem ein Führungselement verschiebbar gelagert ist (siehe hierzu Ausführung von DE 10 2015 101 101 B3) gleitet das Führungselement an dem oberen Abschnitt der Wand entlang und gelangt in die Führungsbahn 10. Von dort aus kann das Führungselement wieder so weit verlagert werden, bis dieses in der gewünschten Führungsbahn 10 bis 18 aufgenommen ist. Das Führungselement muss nicht alle Führungsbahnen durchlaufen, sondern kann durch eine Verlagerung in der entsprechenden Richtung über die Führungskulisse 30 und die Übergänge 32 und Umlenkflächen 34 der jeweils gewünschten Führungsbahn 10 bis 18 zugeführt werden.

Fig. 4 zeigt eine schematische Darstellung einer Führungsanordnung 100 einer zweiten Ausführungsform. Darin sind die Übergänge 32 schematisch dargestellt. Die Führungsanordnung 100 der zweiten Ausführungsform weist eine andere Anzahl an Führungsbahnen 10 bis 26 auf. Daher können beispielsweise vier Verstellelemente unabhängig voneinander über eine einzige Antriebseinrichtung, beispielsweise einen Elektromotor, verstellt werden. Die Übergänge 32 zwischen den einzelnen Öffnungen 28 und Führungsbahnen 10 bis 26 erstrecken sich zwischen den vorstehenden Wänden im Bereich der Führungskulisse 30, wie in Fig. 4 schematisch gezeigt.

Fig. 5 zeigt eine schematische Darstellung einer Führungsanordnung 100 einer dritten Ausführungsform. Die dritte Ausführungsform unterscheidet sich von den ersten beiden Ausführungsformen darin, dass eine erste Rückführbahn 40 vorgesehen ist, von der aus sich zweite Rückführbahnen 44 erstrecken, die zwischen Führungsbahnen 10, 14, 18, 22 und über der oberen Führungsbahn 10 verlaufen. Die obere zweite Rückführbahn 44 verläuft über der ersten Führungsbahn 10 und dient als Rückführbahn, wie sie in den anderen beiden Ausführungsformen gezeigt ist. Die zwischen den Führungsbahnen 10, 14, 18 und 22 verlaufenden zweiten Rückführbahnen 44 ermöglichen die Rückführung eines Führungselementes in einen Bereich der Führungsbahnen 10 bis 26, ohne dass vorhergehende Führungsbahnen oder die Führungskulisse 30 vollständig durchlaufen werden müssen. Die erste Führungsbahn 40 weist eine Rampe 42 auf, die nach dem Überfahren in einer ersten der zweiten Rückführbahnen 44 zwischen den Führungsbahnen 22 und 18 mündet. Die Ausbildung der Rampe 42 sorgt dafür, dass nach dem Überfahren der Rampe 42 bei einer entgegengesetzten Verlagerung des Führungselementes dieses entlang der zweiten Rückführbahn 44 zurück in die Führungskulisse 30 gebracht wird. Damit kann beispielsweise direkt eine Betätigung eines in der Öffnung 28 der Führungsbahn 22 befindlichen Verstellelementes durchgeführt werden, ohne dass ein Führungselement erst über die gesamte Rückführbahn zurückgeführt werden und von oben die einzelnen Stufen durchlaufen muss. Vor dem Übergang der zweiten Rückführbahn 44 in die Führungskulisse 30 weisen die zweiten Rückführbahnen 44 eine Rampe 48 auf, die eine Verlagerung des Führungselementes aus der Führungskulisse 30 zurück in die zweiten Rückführbahnen 44 verhindert. Nach dem Überfahren der Rampen 48 kann das Führungselement lediglich an den Wänden der Rampen 48 entlang bewegt werden. Diese können dann ebenso als Umlenkflächen oder Anlageflächen dienen.

Zwischen den einzelnen zweiten Rückführbahnen 44 sind weiter Rampen 46 vorgesehen, die im Wesentlichen die gleiche Funktion wie die Rampe 42 aufweisen. Wird das Führungselement weiter nach rechts verlagert, so überfährt dieses auch eine Rampe 46 und kann dann weiter nach rechts verlagert werden, bis sämtliche Rampen 46 überfahren worden sind und das Führungselement wieder der ersten Führungsbahn 10 zugeführt wird. Wird nach dem Überfahren einer der Rampen 46 das Führungselement in der entgegengesetzten Richtung verlagert, gelangt dieses in eine zweite Rückführbahn 44 zwischen den Führungsbahnen 10, 14, 18 und 22 und kann nach dem Überfahren der Rampe 48 in eine der Führungsbahnen 10 bis 26 gelangen. Die dritte Ausführungsform weist den Vorteil auf, dass ein schnelleres Verstellen durch die direkte Erreichbarkeit der einzelnen Führungsbahnen 10 bis 26 gegeben ist.

Die Führungsanordnungen 100 ermöglichen die Verlagerung eines Führungselementes zu den verschiedenen Führungsbahnen 10 bis 26, ohne dass eine Federeinrichtung erforderlich ist, welche ein Führungselement in die entsprechenden Ebenen der Führungsbahnen 10 bis 26 drückt. Der Anstieg der Führungsbahnen 10 bis 26 und die Übergänge 32 stellen sicher, dass ein Führungselement stets nur in der vorgegebenen Richtung von oben nach unten durch die Führungskulisse 30 geführt werden kann. Um eine schnellere Rückführung zu erreichen, können zweite Rückführbahnen 44 vorgesehen sein, wie sie in dem dritten Ausführungsbeispiel gezeigt sind. Eine solche Rückführung kann auch bei den anderen beiden gezeigten Ausführungsbeispielen vorgesehen sein.

### Bezugszeichenliste

- 10: Führungsbahn
- 12: Führungsbahn
- 14: Führungsbahn
- 16: Führungsbahn
- 18: Führungsbahn
- 20: Führungsbahn
- 22: Führungsbahn
- 24: Führungsbahn
- 26: Führungsbahn
- 28: Öffnung
- 29: Wand
- 30: Führungskulisse
- 32: Übergang
- 34: Umlenkfläche
- 40: Rückführbahn
- 42: Rampe
- 44: Rückführbahn
- 46: Rampe
- 48: Rampe
- 100: Führungsanordnung

## Patentansprüche

1. Führungsanordnung mit mehreren Führungsbahnen (10, 12, 14, 16, 18, 20, 22, 24; 26), wobei die Führungsbahnen (10, 12, 14, 16, 18, 20, 22, 24; 26) in einer Ebene versetzt zueinander angeordnet sind und zwischen den Führungsbahnen (10, 12, 14, 16, 18, 20, 22, 24; 26) eine Führungskulisse (30) ausgebildet ist, **dadurch gekennzeichnet, dass**
- die Führungsbahnen (10, 12, 14, 16, 18, 20, 22, 24; 26) in zueinander verschiedenen Niveaus verlaufen und
- die Führungsbahnen (10, 12, 14, 16, 18, 20, 22, 24; 26) zur Führungskulisse (30) einen Anstieg aufweisen und aneinander grenzende Führungsbahnen (10, 12, 14, 16, 18, 20, 22, 24; 26) im Übergang (32) zwischen den einzelnen Führungsbahnen (10, 12, 14, 16, 18, 20, 22, 24; 26) zueinander verschiedene Niveaus aufweisen, wobei eine Führungsbahn (10, 12, 14, 16, 18, 20, 22, 24; 26) eine angrenzende Führungsbahn (10, 12, 14, 16, 18, 20, 22, 24; 26) überragt.

2. Führungsanordnung nach Anspruch 1, wobei der Übergang (32) zwischen den Führungsbahnen (10, 12, 14, 16, 18, 20, 22, 24; 26) abgerundet ausgebildet ist.

3. Führungsanordnung nach Anspruch 1 oder 2, wobei mehrere Führungsbahnen (10, 12, 14, 16, 18, 20, 22, 24; 26) untereinander und versetzt zueinander angeordnet sind.

4. Führungsanordnung nach Anspruch 3, wobei die Führungskulisse (30) Umlenkflächen (34) aufweist.

5. Führungsanordnung nach Anspruch 4, wobei sich die Umlenkflächen (34) von den Führungsbahnen (10, 12, 14, 16, 18, 20, 22, 24; 26) aus erstrecken und schräg zu den Führungsbahnen (10, 12, 14, 16, 18, 20, 22, 24; 26) verlaufen.

6. Führungsanordnung nach Anspruch 5, wobei zwischen zwei übereinander oder nebeneinander liegenden Führungsbahnen (10, 12, 14, 16, 18, 20, 22, 24; 26) zwei Umlenkflächen (34) aufeinander zu verlaufen und einer Führungsbahn (10, 12, 14, 16, 18, 20, 22, 24; 26) gegenüberliegen.

7. Führungsanordnung nach einem der Ansprüche 1 bis 6, wobei eine letzte Führungsbahn (18; 24; 26) der Führungsanordnung (100) mit einer ersten Führungsbahn (10) der Führungsanordnung (100) über eine erste Rückführbahn (40) verbunden ist.

8. Führungsanordnung nach Anspruch 7, wobei zwischen mindestens zwei
Führungsbahnen (10, 12, 14, 16, 18, 20, 22, 24; 26) eine zweite Rückführbahn (44) angeordnet ist, die mit der ersten Rückführbahn (40) verbunden ist.

9. Führungsanordnung nach einem der Ansprüche 1 bis 8, aufweisend mindestens ein Führungselement, das in den Führungsbahnen (10, 12, 14, 16, 18, 20, 22, 24; 26) verschiebbar gelagert ist.

10. Führungsanordnung nach einem der Ansprüche 1 bis 9, wobei in mindestens einer Führungsbahn (10, 12, 14, 16, 18, 20, 22, 24; 26) ein Verstellmittel verschiebbar gelagert ist, wobei das Verstellmittel über das Führungselement verlagerbar ist.

## Claims

1. Guide arrangement with a plurality of guide tracks (10, 12, 14, 16, 18, 20, 22, 24; 26), wherein the guide tracks (10, 12, 14, 16, 18, 20, 22, 24; 26) are arranged to be offset relative to one another in a plane and a gate guide (30) is formed between the guide tracks (10, 12, 14, 16, 18, 20, 22, 24; 26), **characterised in that**
- the guide tracks (10, 12, 14, 16, 18, 20, 22, 24; 26) run in different levels relative to one another and
- the guide tracks (10, 12, 14, 16, 18, 20, 22, 24; 26) have a rise relative to the gate guide (30) and mutually adjoining guide tracks (10, 12, 14, 16, 18, 20, 22, 24; 26) have mutually different levels in the transition (32) between the individual guide tracks (10, 12, 14, 16, 18, 20, 22, 24; 26), wherein a guide track (10, 12, 14, 16, 18, 20, 22, 24; 26) projects beyond an adjoining guide track (10, 12, 14, 16, 18, 20, 22, 24; 26).

2. Guide arrangement according to claim 1, wherein the transition (32) between the guide tracks (10, 12, 14, 16, 18, 20, 22, 24; 26) is formed to be rounded.

3. Guide arrangement according to claim 1 or 2, wherein several guide tracks (10, 12, 14, 16, 18, 20, 22, 24; 26) are arranged one below the other and offset relative to one another.

4. Guide arrangement according to claim 3, wherein the gate guide (30) has deflecting surfaces (34).

5. Guide arrangement according to claim 4, wherein the deflecting surfaces (34) extend out from the guide tracks (10, 12, 14, 16, 18, 20, 22, 24; 26) and run at an inclination with respect to the guide tracks (10, 12, 14, 16, 18, 20, 22, 24; 26).

6. Guide arrangement according to claim 5, wherein two deflecting surfaces (34) run towards one another between two guide tracks (10, 12, 14, 16, 18, 20, 22, 24; 26) lying one above the other or adjacent to one another and are opposite a guide track (10, 12, 14, 16, 18, 20, 22, 24; 26).

7. Guide arrangement according to any one of claims 1 to 6, wherein a last guide track (18; 24; 26) of the guide arrangement (100) is connected with a first guide track (10) of the guide arrangement (100) by way of a first return track (40).

8. Guide arrangement according to claim 7, wherein a second return track (44), which is connected with the first return track (40), is arranged between at least two guide tracks (10, 12, 14, 16, 18, 20, 22, 24; 26).

9. Guide arrangement according to any one of claims 1 to 8, comprising at least one guide element which is mounted in the guide tracks (10, 12, 14, 16, 18, 20, 22, 24; 26) to be displaceable.

10. Guide arrangement according to any one of claims 1 to 9, wherein an adjusting means is movably mounted in at least one guide track (10, 12, 14, 16, 18, 20, 22, 24; 26) and wherein the adjusting means is displaceable by way of the guide element.

## Revendications

1. Dispositif de guidage avec plusieurs glissières de guidage (10, 12, 14, 16, 18, 20, 22, 24 ; 26), dans lequel
les glissières de guidage (10, 12, 14, 16, 18, 20, 22, 24 : 26) sont
disposées de manière décalée les unes par rapport aux autres dans un plan et qu'une fente de guidage (30) est prévue entre les glissières de guidage (10, 12, 14, 16, 18, 20, 22, 24 ; 26), **caractérisé en ce que**
- les glissières de guidage (10, 12, 14, 16, 18, 20, 22, 24 ; 26) s'étendent à différents niveaux les unes par rapport aux autres, et
- que les glissières de guidage (10, 12, 14, 16, 18, 20, 22, 24 ; 26) sont inclinées vers la coulisse de guidage (30)
et que les glissières de guidage
adjacentes (10, 12, 14, 16, 18, 20, 22, 24 ; 26) dans la transition (32) entre les différentes glissières de guidage (10, 12, 14, 16, 18, 20, 22, 24; 26) présentent des niveaux différents les unes par rapport aux autres, une glissière de guidage (10, 12, 14, 16, 18, 20, 22,
24 ; 26) dépassant une glissière de guidage adjacente (10, 12, 14, 16, 18, 20, 22, 24 ; 26).

2. Dispositif de guidage selon la revendication 1,
dans lequel la transition (32) entre les
glissières de guidage (10, 12, 14, 16, 18, 20, 22, 24 ; 26) est arrondie.

3. Dispositif de guidage selon la revendication 1 ou 2, dans lequel plusieurs glissières de guidage (10, 12, 14, 16, 18, 20, 22, 24 ; 26) sont disposées les unes au-dessous des autres et décalées les unes par rapport aux autres.

4. Dispositif de guidage de la revendication 3, dans lequel la coulisse de guidage (30) comprend des surfaces de déviation (34).

5. Dispositif de guidage selon la revendication 4,
dans lequel les surfaces de déviation (34) s'étendent depuis
les glissières de guidage (10, 12, 14, 16, 18, 20, 22, 24 ; 26) et sont inclinées par rapport
aux glissières de guidage (10, 12, 14, 16, 18, 20, 22, 24 ; 26) .

6. Dispositif de guidage selon la revendication 5, dans lequel deux surfaces de déviation (34) s'étendent l'une vers l'autre entre
deux glissières de guidage (10, 12, 14, 16, 18, 20, 22, 24 ; 26) superposées ou juxtaposées et se trouvent en face d'une glissière de guidage (10, 12, 14, 16, 18, 20, 22, 24 ; 26).

7. Dispositif de guidage selon l'une des
revendications 1 à 6, dans lequel une dernière glissière de guidage (18 ; 24 ; 26) du dispositif de guidage (100) est reliée à une première glissière de guidage (10) du dispositif de guidage (100) par l'intermédiaire d'une première glissière de retour (40).

8. Dispositif de guidage selon la revendication 7,
dans lequel une deuxième
glissière de retour (44) est disposée entre deux glissières de guidage (10, 12, 14, 16, 18, 20, 22, 24 ; 26) et est reliée à la première glissière de retour (40).

9. Dispositif de guidage selon l'une des revendications 1 à 8, présentant au moins un élément de guidage monté de façon mobile dans les glissières de guidage (10, 12, 14, 16, 18, 20, 22, 24 ; 26).

10. Dispositif de guidage selon l'une des revendications 1 à 9, dans lequel, dans au moins une glissière de guidage (10, 12, 14, 16, 18, 20, 22, 24 ; 26), un moyen de réglage est monté de façon mobile, le moyen de réglage étant déplaçable par l'intermédiaire de l'élément de guidage.
